# EUROPÄISCHE PATENTSCHRIFT

(11) **EP 2 860 948 B1**
(45) Veröffentlichungstag und Bekanntmachung des Hinweises auf die Patenterteilung: **13.03.2019**
(21) Anmeldenummer: 13188115.3
(22) Anmeldetag: 10.10.2013
(51) Int. Cl.: H04M 1/23, G06F 3/0489, G06F 1/16, H03K 17/96, H04M 1/247

(54) **Elektronisches Gerät mit mechanischem und berührungsempfindlichem Tastschalter**
Electronic device with mechanical and touch sensitive key switches
Appareil électronique avec commutateurs mécaniques et tactiles

(43) Veröffentlichungstag der Anmeldung: 15.04.2015
(73) Patentinhaber: Gigaset Communications GmbH, 40549 Düsseldorf (DE)
(72) Erfinder: Mari, Andreas, 86577 Sielenbach (DE)
(74) Vertreter: Michalski Hüttermann & Partner Patentanwälte mbB

(56) Entgegenhaltungen:
- WO-A1-92/08285
- US-A1- 2008 094 258

## Beschreibung

Die vorliegende Erfindung betrifft ein elektronisches Gerät, vorzugsweise eine Kommunikationsgerät und besonders bevorzugt ein Telefoniegerät, mit einer Tastenidentifikationseinrichtung.

Im Bereich der Kommunikationstechnik sind unterschiedliche elektronische Geräte bekannt. Derartige elektronische Geräte weisen in der Regel ein Bedienfeld mit ein oder mehreren mechanisch betätigbaren Tasten auf. Die Tasten sind mit einer oder mehreren Funktionen belegt, wobei die jeweilige Tastenfunktion durch Betätigung der Taste auslösbar ist. Weiterhin kann vorgesehen sein, dass wenigstens eine Taste des Bedienfelds eine haptische Markierung aufweist. Eine solche haptische Markierung bietet insbesondere Menschen mit einer Sehbehinderten eine Orientierungshilfe, um sich auf dem Bedienfeld zurechtzufinden.

Problematisch ist jedoch, dass Menschen mit einer Sehbehinderung sich zwar aufgrund der haptischen Markierung auf dem Bedienfeld orientieren können, allerdings nicht genau wissen, welche Funktion durch die jeweilige Taste auslösbar ist. Die Bedienung eines elektrischen Geräts, mit dem unterschiedliche Funktionen ausführbar sind, fällt Menschen mit einer Sehbehinderung daher sehr schwer.

Die US 2008/0094258 beschreibt ein elektronisches System mit einer Vielzahl von einem Nutzer betätigbaren Tasten. Das elektronische System umfasst ein Benutzereingabevorrichtung, eine Abfragevorrichtung und einen Prozessor. Der Prozessor ist elektrisch mit den vom Benutzer betätigbaren Tasten und dem Abfragevorrichtung gekoppelt. Der Prozessor erzeugt selektiv ein entsprechendes Abfragesignalsignal oder ein entsprechendes Tastensignal basierend auf einer Tasteneinwirkung. Wenn das entsprechende Abfragesignal an die Abfragevorrichtung gesendet wird, erzeugt die Abfragevorrichtung eine entsprechende Aufforderung nach einer entsprechenden Abfrage. Wenn das entsprechende Tastensignal erzeugt wurde, führt der Prozessor den Eingabebefehl der Taste aus.

Die WO 92/08285 beschreibt ein Verfahren und eine Vorrichtung für Tastenfelder (1, 2), zur Übertragung akustischer, optischer oder tastbarer Informationen über die Identität, Funktion, ordnungsgemäße Verwendung oder den potentiellen Nutzen einer bestimmten Taste oder Tastengruppe (1a) an einen Benutzer. Das Hauptanliegen des Systems ist die Informationsergänzung zu einer herkömmlichen Tastatur.

Es ist die Aufgabe der Erfindung, ein elektrisches Gerät anzugeben, dessen Bedienung erleichtert ist.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit ein elektronisches Gerät vorgesehen, umfassend mindestens eine mechanische Taste, wobei die mechanische Taste mit mindestens einer Standard-Bedienfunktion belegt ist, dadurch gekennzeichnet, dass die mechanische Taste zusätzlich einen berührungsempfindlichen Sensor aufweist.

Unter dem erfindungsgemäßen elektronischen Gerät ist vorzugsweise ein Kommunikationsgerät zu verstehen. Besonders bevorzugt ist jedoch vorgesehen, dass das erfindungsgemäße elektronische Gerät ein Telefoniegerät ist, wobei das Telefoniegerät vorzugsweise ein Display aufweist kann und/oder netzwerkfähig beziehungsweise internetfähig ist.

Unter der mechanischen Taste ist sowohl eine Taste mit einem mechanischen Druckpunkt zu verstehen, wie sie von Computertastaturen, Taschenrechnern, Telefonen ohne Touchscreen oder auch Fernbedienungen von Multimediageräten bekannt ist, als auch ein Schiebeschalter oder ein Drehknopf, der einen mechanischen Widerstand aufweist. Eine derartige mechanische Taste weist einen Schaltpunkt auf, der durch Betätigung der mechanischen Taste überschritten wird, wodurch eine vorbestimmte Funktion, respektive eine Standard-Bedienfunktion, auslösbar ist. Es ist somit ein wesentlicher Aspekt der Erfindung, dass die mechanisch Taste, die für gewöhnlich einen Druckpunkt und/oder Schaltpunkt aufweist, zusätzlichen einen berührungsempfindlichen Sensor aufweist, mit dem schon die Berührung der Taste erfassbar ist, ohne dass der Druckpunkt bzw. Schaltpunkt erreicht bzw. überschritten wird.

Erfindungsgemäß ist vorgesehen, dass zu der Standard-Bedienfunktion eine Information auf dem elektronischen Gerät und/oder im Netzwerk gespeichert und/oder über ein Netzwerk, wie das Internet, abrufbar ist.

Die Information kann als Textdatei und/oder Audiodatei vorliegen, wobei der Inhalt der Information im Wesentlichen die durch Betätigung der Taste ausführbare Funktion der Standard-Bedienfunktion beschreibt. Auf dem elektronischen Gerät ist die Information auf einem internen Speicher gespeichert. Die im Netzwerk gespeicherte oder über das Internet abrufbare Information zu der Standard-Bedienfunktion ist unabhängig von dem elektronischen Gerät auf einem Server gespeichert und kann bei Bedarf ohne Zugriff auf das elektronische Gerät geändert und entsprechend angepasst werden.

Erfindungsgemäß ist zudem vorgesehen, dass mittels des berührungsempfindlichen Sensors die Information der Standard-Bedienfunktion abrufbar ist und, dass das Abrufen der Information unter Berücksichtigung einer Prioritätenvergabe erfolgt.

Beispielsweise kann auf dem elektronischen Gerät gespeichert sein, dass zunächst die auf dem Geräte gespeicherte Information abgerufen wird. Sollte zu der Standard-Bedienfunktion keine Information auf dem Gerät gespeichert sein oder ist die gespeicherte Information nicht abrufbar, wird in einem zweiten Schritt die im Netzwerk gespeicherte Information oder die über das Internet abrufbare Information abgerufen. Ebenso ist es aber auch denkbar, dass zunächst die Information aus dem Netzwerk oder aus dem Internet abgerufen wird und in einem zweiten Schritt die auf dem elektronischen Gerät gespeicherte Information. Weiterhin ist es auch möglich, dass zunächst ein Abgleich zwischen der auf dem elektronischen Gerät gespeicherten und/oder der im Netzwerk gespeicherten und/oder der über das Internet abrufbaren Information erfolgt und abhängig von diesem Vergleich die jüngere Datei abgerufen wird. Somit wird eine Möglichkeit geschaffen, die mechanische Taste zu identifizieren, um eine Information über die Standard-Bedienfunktion der mechanischen Taste vor dem eigentlichen manuellen Auslösen der mechanischen Taste zu erhalten.

Eine weitere bevorzugte Weiterbildung der Erfindung liegt darin, dass die Information der Standard-Bedienfunktion akustisch wiedergebbar ist. Auf diese Weise wird akustisch angegeben, welche Standard-Bedienfunktion mit der mechanischen Taste durch manuelle Betätigung ausführbar ist. Die akustische Wiedergabe der Information hilft insbesondere Menschen mit einem geringen bis hin zu keinem visuellen Wahrnehmungsvermögen, eine Information über die ausführbare Funktion zu erhalten.

Weiterhin sieht eine bevorzugte Weiterbildung der Erfindung vor, dass die Information der Standard-Bedienfunktion auf einem Display optisch anzeigbar ist. Auf diese Weise wird die Information graphisch angezeigt, was insbesondere Menschen mit einem eingeschränkten visuellen Wahrnehmungsvermögen helfen kann, die mit der mechanischen Taste ausführbare Funktion nachzuvollziehen, z.B. mittels einer besonders großen Darstellung auf dem Display.

In diesem Zusammenhang sieht eine weitere bevorzugte Weiterbildung der Erfindung vor, dass die im Display optisch angezeigte Information manipulierbar ist. Auf diese Weise kann die im Display angezeigte Information vergrößert angezeigt werden, um Menschen mit einem eingeschränkten visuellen Wahrnehmungsvermögen die Möglichkeit zu bieten, die Information auf eine für sie lesbare Größe darzustellen.

Weiterhin sieht eine weitere bevorzugte Weiterbildung der Erfindung vor, dass das elektronische Gerät eine Mehrzahl mechanischer Tasten aufweist, die jeweils mit mindestens einer Standard-Bedienfunktion belegt sind und zusätzlich jeweils einen berührungsempfindlichen Sensor aufweisen.

Erfindungsgemäß ist zudem ein Verfahren zum Bedienen eines mindestens eine mechanische Taste aufweisenden elektronischen Gerätes vorgesehen, wobei die mechanische Taste mit mindestens einer Standard-Bedienfunktion belegt ist und der Standard-Bedienfunktion eine Information zugewiesen ist und wobei die mechanische Taste zusätzlich einen berührungsempfindlichen Sensor aufweist, dadurch gekennzeichnet, dass durch Betätigung des berührungsempfindlichen Sensors die der Standard-Bedienfunktion zugewiesene Information abgerufen wird.

Es ist somit ein wesentlicher Aspekt des erfindungsgemäßen Verfahrens, dass durch die Betätigung des berührungsempfindlichen Sensors Informationen zu der durch die manuelle Betätigung der mechanischen Taste ausführbaren Standard-Bedienfunktion abgerufen werden. Somit wird eine Möglichkeit geschaffen, eine Information über die Standard-Bedienfunktion der mechanischen Taste vor dem eigentlichen manuellen Auslösen der mechanischen Taste zu erhalten.

Eine weitere bevorzugte Weiterbildung der Erfindung sieht vor, dass die abgerufene, der Standard-Bedienfunktion zugewiesene Information akustisch wiedergegeben wird. Auf diese Weise wird akustisch angegeben, welche Standard-Bedienfunktion mit der mechanischen Taste durch manuelle Betätigung ausführbar ist. Die akustische Wiedergabe der Information hilft insbesondere Menschen mit einem geringen bis hin zu keinem visuellen Wahrnehmungsvermögen, eine Information über die ausführbare Funktion zu erhalten.

Weiterhin liegt eine weiter bevorzugte Weiterbildung der Erfindung darin, dass die abgerufene, der Standard-Bedienfunktion zugewiesene Information vorzugsweise in einem Display optisch dargestellt wird. Auf diese Weise wird die Information graphisch angezeigt, was insbesondere Menschen mit einem eingeschränkten visuellen Wahrnehmungsvermögen helfen kann, die mit der mechanischen Taste ausführbare Funktion nachzuvollziehen.

Im Übrigen sind die oben beschriebenen bevorzugten Weiterbildungen des erfindungsgemäßen elektrischen Geräts entsprechend auch auf das Verfahren anwendbar.

Nachfolgend wird die Erfindung unter Bezugnahme auf die anliegende Zeichnung anhand bevorzugter Ausführungsformen näher erläutert.

Es zeigen
- Fig. 1: eine schematische Ansicht eines elektronischen Geräts gemäß einem bevorzugten Ausführungsbeispiel der Erfindung und
- Fig. 2: eine schematische Darstellung eines Verfahrens gemäß einem bevorzugten Ausführungsbeispiel der Erfindung.

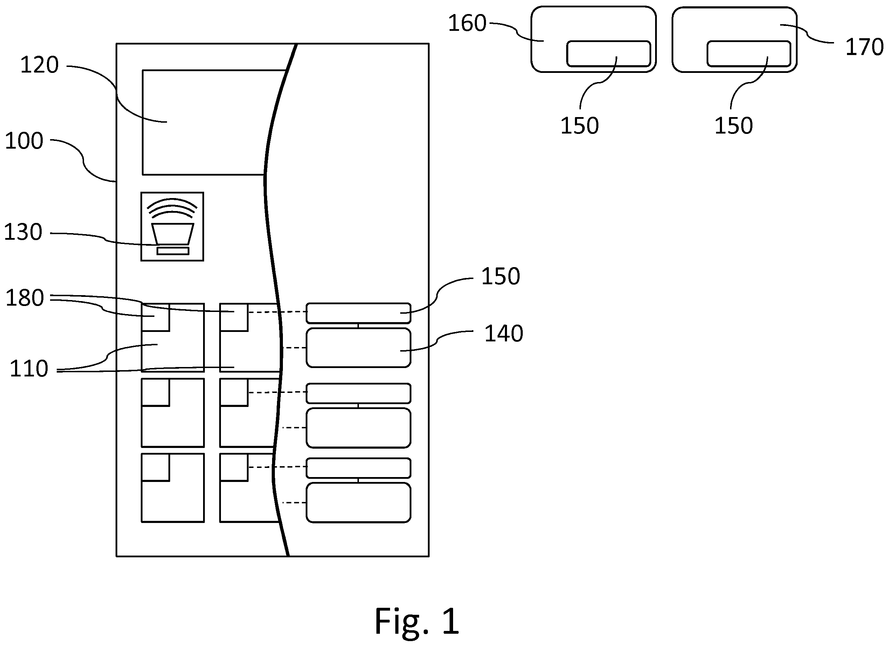

Figur 1 zeigt ein elektronisches Gerät 100 in Form eines Telefoniegeräts, wobei das elektronische Gerät 100 eine Mehrzahl mechanischer Tasten 110, ein Display 120 und einen Lautsprecher 130 aufweist. Die mechanischen Tasten 110 sind mit jeweils mindestens einer Standard-Bedienfunktion 140 belegt, die durch Betätigung der jeweiligen mechanischen Taste 110 ausführbar ist. Zudem weisen die mechanischen Tasten 110 zusätzlich jeweils einen berührungsempfindlichen Sensor 180 auf.

Weiterhin ist ersichtlich, dass zu der Standard-Bedienfunktion 140 einer jeweiligen mechanischen Taste 110 eine Information 150 entweder lokal auf dem elektrischen Gerät 100 oder in einem mit dem Gerät kommunikativ verbunden Netzwerk 160 gespeichert ist. Zudem kann die Information 150 zu der Standard-Bedienfunktion 140 einer jeweiligen mechanischen Taste 110 auch über das Internet abgerufen werden, sofern eine entsprechende Verbindung vorliegt. Die Information 150 kann sowohl als Textdatei und/oder Audiodatei entsprechend abgespeichert sein.

Durch Betätigung des berührungsempfindlichen Sensors 180 einer mechanischen Taste 110 ist die Information 150 der Standard-Bedienfunktion 140 der mechanischen Taste 110 abrufbar. Durch das Abrufen der Information 150 wird der Inhalt der Information 150 entweder im Display 120 des elektronischen Gerätes 100 angezeigt und/oder über den Lautsprecher 130 akustisch wiedergegeben. Auf diese Weise ist durch das Berühren des berührungsempfindlichen Sensors 180 die Information 150 der durch die Betätigung der mechanischen Taste 110 ausführbaren Standard-Bedienfunktion 140 abrufbar und vor Betätigung der mechanischen Taste 110 entweder auditiv oder visuell wiedergebbar. Somit wird eine Möglichkeit geschaffen, eine Information 150 über die Standard-Bedienfunktion 140 der mechanischen Taste 110 vor dem eigentlichen manuellen Auslösen der mechanischen Taste 110 zu erhalten.

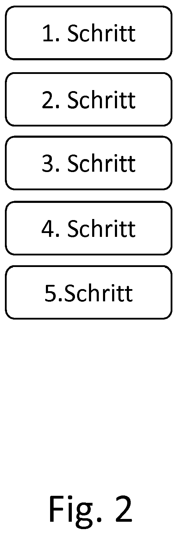

In Figur 2 ist der Verfahrensablauf zur Betätigung der den Berührungssensor 180 aufweisenden mechanischen Taste 110 gezeigt.

In einem ersten Schritt wird der berührungsempfindliche Sensor 180 der mechanischen Taste 110 berührt. Durch die Berührung des berührungsempfindlichen Sensors 180 wird in einem zweiten Schritt die Information 150 der Standard-Bedienfunktion 140 abgerufen. In einem dritten Schritt wird die abgerufenen Information 150 entweder akustisch oder visuell wiedergeben. Da die Standard-Bedienfunktion 140 der mechanischen Taste 110 nun bekannt ist, kann in einem fünften Schritt die Standard-Bedienfunktion 140 der mechanischen Taste 110 ausgeführt werden.

**Bezugszeichenliste**

| | |
|---|---|
| Elektronisches Gerät | 100 |
| Mechanische Taste | 110 |
| Display | 120 |
| Lautsprecher | 130 |
| Standard-Bedienfunktion | 140 |
| Information | 150 |
| Netzwerk | 160 |
| Internet | 170 |
| Berührungsempfindlicher Sensor | 180 |

## Patentansprüche

1. Elektronisches Gerät (100), umfassend
mindestens eine mechanische Taste (110), wobei
die mechanische Taste (110) einen berührungsempfindlichen Sensor (180) aufweist und mit mindestens einer Standard-Bedienfunktion (140) belegt ist,
zu der Standard-Bedienfunktion (140) eine Information (150) auf dem elektronischen Gerät (100) und/oder in einem Netzwerk (160) gespeichert ist und/oder über das Internet (170) abrufbar ist, **dadurch gekennzeichnet, dass**
mittels des berührungsempfindlichen Sensors (180) die Information (150) der Standard-Bedienfunktion (140) unter Berücksichtigung einer Prioritätenvergabe abrufbar ist.

2. Elektronisches Gerät nach Anspruch 1, **dadurch gekennzeichnet, dass** die Information (150) der Standard-Bedienfunktion (140) akustisch wiedergebbar ist.

3. Elektronisches Gerät nach einem der Ansprüche 1 oder 2, **dadurch gekennzeichnet, dass** die Information (150) der Standard-Bedienfunktion (140) auf einem Display (120) optisch anzeigbar ist.

4. Elektronisches Gerät nach Anspruch 3, **dadurch gekennzeichnet, dass** die im Display (120) optisch angezeigte Information (150) manipulierbar ist.

5. Elektronisches Gerät nach einem der Ansprüche 1 bis 4, **dadurch gekennzeichnet, dass** das elektronische Gerät (100) eine Mehrzahl mechanischer Tasten (110) aufweist, die jeweils mit mindestens einer Standard-Bedienfunktion (140) belegt sind und zusätzlich jeweils einen berührungsempfindlichen Sensor (180) aufweist.

6. Verfahren zum Bedienen eines mindestens eine mechanische Taste (110) aufweisenden elektronischen Gerätes (100), wobei
die mechanische Taste (110) mit mindestens einer Standard-Bedienfunktion (140) belegt ist und der Standard-Bedienfunktion (140) eine Information (150) zugewiesen ist,
die Information (150) auf dem elektronischen Gerät (100) und/oder in einem Netzwerk (160) gespeichert ist und/oder über das Internet (170) abrufbar ist,
die mechanische Taste (110) zusätzlich einen berührungsempfindlichen Sensor (180) aufweist und
durch Betätigung des berührungsempfindlichen Sensors (180) die der Standard-Bedienfunktion (140) zugewiesene Information (150) abgerufen wird, **dadurch gekennzeichnet, dass**
das Abrufen der Information unter Berücksichtigung einer Prioritätenvergabe erfolgt.

7. Verfahren nach Anspruch 6, **dadurch gekennzeichnet, dass** die abgerufene, der Standard-Bedienfunktion (140) zugewiesene Information (150) akustisch wiedergegeben wird.

8. Verfahren, nach Anspruch 6 oder 7, **dadurch gekennzeichnet, dass** die abgerufene, der Standard-Bedienfunktion (140) zugewiesene Information (150) in einem Display (120) optisch dargestellt wird.

## Claims

1. An electronic device (100), comprising:
at least one mechanical button (110),
the mechanical button (110) comprising a touch-sensitive sensor (180) and being associated with at least one standard operating function (140),
a piece of information (150) regarding the standard operating function (140) being stored on the electronic device (100) and/or on a network (160) and/or retrievable via the Internet (170), **characterized in that**
the piece of information (150) of the standard operating function (140) can be retrieved by way of the touch-sensitive sensor (180), taking a priority assignment into consideration.

2. The electronic device according to claim 1, **characterized in that** the piece of information (150) of the standard operating function (140) can be acoustically reproduced.

3. The electronic device according to either claim 1 or 2, **characterized in that** the piece of information (150) of the standard operating function (140) can be visually displayed on a display (120).

4. The electronic device according to claim 3, **characterized in that** the piece of information (150) visually displayed on the display (120) can be manipulated.

5. The electronic device according to any one of claims 1 to 4, **characterized in that** the electronic device (100) comprises a plurality of mechanical buttons (110), which are each associated with at least one standard operating function (140), and additionally comprises a respective touch-sensitive sensor (180).

6. A method for operating an electronic device (100) comprising at least one mechanical button (110),
the mechanical button (110) being associated with at least one standard operating function (140), and a piece of information (150) being assigned to the standard operating function (140);
the piece of information (150) being stored on the electronic device (100) and/or on a network (160) and/or retrievable via the Internet (170);
the mechanical button (110) additionally comprising a touch-sensitive sensor (180); and
the piece of information (150) assigned to the standard operating function (150) is retrieved upon actuation of the touch-sensitive sensor (180), **characterized in that**
the piece of information is retrieved taking a priority assignment into consideration.

7. The method according to claim 6, **characterized in that** the retrieved piece of information (150) assigned to the standard operating function (140) is acoustically reproduced.

8. The method according to claim 6 or 7, **characterized in that** the retrieved piece of information (150) assigned to the standard operating function (140) is visually displayed on a display (120).

## Revendications

1. Appareil électronique (100) comprenant
au moins une touche mécanique (110), dans lequel
la touche mécanique (110) présente un capteur sensible au toucher (180) et est dotée d'au moins une fonction de commande standard (140),
une information (150) est stockée sur l'appareil électronique (100) et/ou dans un réseau (160) en plus de la fonction de commande standard (140), et/ou est disponible par l'intermédiaire d'internet (170), **caractérisé en ce que**
l'information (150) de la fonction de commande standard (140) est disponible au moyen du capteur sensible au toucher (180) moyennant la prise en compte d'une désignation prioritaire.

2. Appareil électronique selon la revendication 1, **caractérisé en ce que** l'information (150) de la fonction de commande standard (140) est reproductible de manière acoustique.

3. Appareil électronique selon l'une des revendications 1 ou 2, **caractérisé en ce que** l'information (150) de la fonction de commande standard (140) peut être affichée optiquement sur un dispositif d'affichage (120).

4. Appareil électronique selon la revendication 3, **caractérisé en ce que** l'information (150) indiquée optiquement dans le dispositif d'affichage (120) peut être manipulée.

5. Appareil électronique selon l'une des revendications 1 à 4, **caractérisé en ce que** l'appareil électronique (100) présente un grand nombre de touches mécaniques (110), qui sont respectivement munies d'au moins une fonction de commande standard (140), et présente en outre respectivement un capteur sensible au toucher (180).

6. Procédé de mise en oeuvre d'au moins un appareil électronique (100) présentant une touche mécanique (110), dans lequel
la touche mécanique (110) est munie d'au moins une fonction de commande standard (140) et une information (150) est associée à la fonction de commande standard (140),
l'information (150) est stockée sur l'appareil électronique (100) et/ou dans un réseau (160) et/ou est disponible par le biais d'internet (170),
la touche mécanique (110) présente en complément un capteur sensible au toucher (180), et
l'information (150) associée à la fonction de commande standard (140) est disponible par l'actionnement du capteur sensible au toucher (180), **caractérisé en ce que**
la mise en évidence de l'information a lieu moyennant la prise en compte d'une désignation prioritaire.

7. Procédé selon la revendication 6, **caractérisé en ce que** l'information (150) disponible associée à la fonction de commande standard (140) est reproduite de manière acoustique.

8. Procédé selon la revendication 6 ou la revendication 7, **caractérisé en ce que** l'information (150) disponible associée à la fonction de commande standard (140) est représentée optiquement sur un dispositif d'affichage (120).
